# EUROPEAN PATENT SPECIFICATION

(11) **EP 2 525 327 B1**
(45) Date of publication and mention of the grant of the patent: **04.09.2019**
(21) Application number: 11004199.3
(22) Date of filing: 20.05.2011
(51) Int. Cl.: G06T 17/10

(54) **Computer-implemented method for digitally shortening of a cap of a dental bridge and a computer-readable medium**
Computerimplementiertes Verfahren zur digitalen Verkürzung einer Kappe einer Zahnbrücke und computerlesbares Medium
Procédé informatique pour le raccourcissement d'un capuchon de bridge dentaire et support lisible sur ordinateur

(43) Date of publication of application: 21.11.2012
(73) Proprietor: Straumann Holding AG, 4002 Basel (CH)
(72) Inventor: Heinz, Kristian, 12489 Berlin (DE); Berlin, Felix, 82166 Gräfelfing bei München (DE)
(74) Representative: Grünecker Patent- und Rechtsanwälte PartG mbB

(56) References cited:
- KaVo Dental Excellence: "Instructions for use Everest Energy CAD-Software Version 3.x", INTERNET CITATION, 26 September 2008 (2008-09-26), pages 1-159, XP007920039, Retrieved from the Internet: URL:http://www.kavo-everest.com/EN/Downloa ds/Instructions-for-use.aspx [retrieved on 2012-01-03]
- REIMANN M ET AL: "Vom Zahntechniker zum CAD/CAM Experten", DIGITAL DENTAL NEWS , vol. 3 1 April 2009 (2009-04-01), pages 1-6, XP007920040, Retrieved from the Internet: URL:http://www.ddn-online.net/uploads/smar tsection/417_ddn_0409_insider.pdf [retrieved on 2012-01-04]
- SIMONE KETTELAAR ET AL: "Konstruktion einer dreigliedrigen Brücke - ZENO Tec von Wieland, Teil III", DENTAL LABOR, VERLAG NEUER MERKUR, MÜNCHEN, DE, vol. 2007, no. 9, 1 September 2007 (2007-09-01), pages 1194-1198, XP008147041, ISSN: 0011-8656

## Description

The invention relates to a computer-implemented method for digitally shortening of a cap of a dental bridge and a computer-readable medium.

From prior art it is known that a cap that may be attached to a tooth stump or to an implant may be physically shortened. The patent application US 4,253,829 discloses that a blank in shape of a hollow conical body is servable along any one of a plurality of planes normal to the axis of the blank to produce a core form for any particular tooth size.

The document "Instructions for use Everest® Energy CAD-Software Version 3.x" by KaVo Dental Excellence (http://www.kavo-everest.com/EN/Downloads/lnstructions-for-use.aspx) is related to a system and CAD software, which allows the creation of computer supported dental restorations from different materials. Starting from prepared three dimensional data information and from data concerning the squash bite, a tooth area comprising teeth, prepared teeth and gingival is obtained. All the copings and missing pontics are automatically inserted and connected with bars in a CAD process. For this process standard parameters and standard pontics are used. The provided standard bridge can then individually be adapted.

The document "Vom Zahntechniker zum CAD/CAM-Experten!" of M. Reimann et al (hftp://www.ddn-online.net/uploads/smartsection/417_ddn_0409_insider.pdf) is related to CAD/CAM methods being used in the dental field, wherein bridges with pontics and different connectors may be designed.

The document "Konstruktion einer dreigliedrigen Brucke" of S. Ketelaar et al (das dental labor, LV, Heft 9/2007; Verlag Neuer Merkur, Munich; pages 1194 - 1198) refers to the construction of pontics, wherein a bridge element may be adapted to the distance to the gingival, and may be partly changed by deforming.

It is the object of the present invention to enable digitally shortening of a cap of a dental bridge to prepare a fitting dental bridge with which a patient may be provided in a comfortable manner.

This object is achieved with a computer-implemented method according to claim 1 and with a computer-readable medium according to claim 7. Preferred embodiments of the invention are disclosed in the dependent claims. All the method steps described in the following may be performed automatically and do not necessarily need the interaction of a user.

A computer-implemented method for digitally shortening a cap of a dental bridge comprises the step (a) of loading three dimensional data of the dental bridge from a computer-readable storage medium, the three dimensional data comprising cap data describing a cap of the dental bridge and bar data describing at least one bar of the dental bridge, the at least one bar being attached to the cap, or generating three dimensional data of the dental bridge with a modelling software, the three dimensional data comprising cap data describing a cap of the dental bridge and bar data describing at least one bar of the dental bridge, the at least one bar being attached to the cap; step (b) of determining intersection points of one of the at least one bar with geometrical features of the cap, i.e., the intersection points with a wall of the cap and intersection points with a longitudinal axis of the cap, said axis being named z axis and extending in a direction from an inward end to an outward end of the cap, the intersection points being described by three dimensional coordinates, wherein the z axis is the z axis of a Cartesian coordinate system, a z value being a z coordinate of a intersection point; and in case that a further bar is attached to the cap, repeating step (b) and considering in repeated step (b) the further bar instead of the one of the at least one bars, allowing all bars being connected to the cap being taken into account and preventing that one of said bars will be cut by a cutting surface; step (c) of determining from said intersection points an intersection point with the biggest z value on said z axis; step (d) of performing a cut of the cap along a cutting surface, the location of which is based on said intersection point with the biggest z value, such as said cutting surface being defined to go through said intersection point with the biggest z value; and step (e) of defining data of a portion of the cap below the cutting surface as shortened cap, wherein below means in direction to the inward end of the cap.

In an example not part of the invention, the bar data describing at least one bar of the dental bridge may comprise data of the bar defining its physical dimensions, like e.g. geometry, position relative to the cap, and also may comprise data defining virtual dimensions. The virtual dimensions mean that the physical dental bridge may comprise no physical bar at e.g. a position being described by the virtual dimensions. The virtual dimensions may used to determine the intersection points of the at least one bar with geometrical features of the cap. Such geometrical features of the cap may be provided at a position of the cap where no physical bar may be provided in the dental bridge, i.e. the virtual dimensions of the bar may describe the bar at said position.

For digitally shortening a cap of such a dental bridge it may be necessary to take into account intersection points of the virtual dimensions of the bar with a geometrical feature of the cap. Instead of data defining virtual dimensions (or in addition) for the calculation of the intersection points data interpolating the extension of the bar may be obtained by (linearly) interpolating the dimensions that describe the physical dimensions beyond the end of a bar. For example, when determining intersection points with one bar and the wall of a cap and with said one bar and a longitudinal axis of said cap results in an intersection point with the biggest z value being located on the longitudinal axis, then this intersection point may used to determine the location of the cutting surface. With this selection of the intersection point, the cap, the bar and the attachment of cap and bar may result in a stable dental bridge. In some cases choosing the cutting surface to be based on the intersection of the bar with the longitudinal axis of the cap results to a portion of the cap surrounding the area where the bar joins with the cap which leads to an increased stability of the bridge at this joint.

The cap may have a conical shape with an inward end and an outward end. The inward end of the cap may be attached to a rest tooth or an implant and to the outward end dental fittings may be attached, such as crowns or veneers. If the dental bridge, for example, is attached to the lower jaw of a patient, the inward end of the cap is directed to the bone of the lower jaw and the outward end is directed away from the bone of the lower jaw. The cross section of the wall of the cap may be circular, elliptical or may have a shape being suitable for a predetermined tooth type to which the cap should be attached.

Further, the cap may be provided with a boring extending from the inward end to the outward end such that e.g. a screw may be inserted such that the cap may be attached e.g. to an implant. The boring may have a centre axis coinciding with the longitudinal axis of the cap. The at least one bar being attached to the cap may have a circular, elliptical, U-shaped, or other polygonal cross section, wherein the cross section may be selected such that a dental restoration may be attached to it an easy but also solid way.

The cutting surface may further be defined by being a plane and having a normal vector extending in direction of the longitudinal axis of the cap. By using a cutting surface to shorten the cap, no scaling of the cap to result in a smaller height is required and thus a possible deformation of the cap due to scaling can be prevented. And as the shortening of the cap is performed in the design process of the dental bridge, a subsequent shortening of the produced cap can be prevented.

The longitudinal axis may be selected to be a central and/or symmetry axis of the cap. For example, depending on the tooth type (e.g. molar, premolar or incisor) to which the cap may be attached a longitudinal axis of the cap may be selected. These teeth and thus also the caps may have different shapes.

The cutting edges of the shortened cap may be rounded. The rounding of said edges may prevent the occurrence of high forces at the edges when a dental restoration being attached to the dental bridge is used, e.g. during a chewing process.

In further steps of the computer-implemented method, a height of the cap below the cutting surface may be determined, it may be determined whether said height is less than a minimum height, if so, the location of the cutting surface may be adjusted such that the shortened cap has the minimum height, and if not, the location of the cutting surface may be maintained. By determining whether the cap below the cutting surface has a minimum height, wherein the height may be the extension of the cap along the longitudinal axis, it is possible to prevent a shortening of a cap to such an extent that e.g. a crown may not be attached to the cap in a secure way. The minimum height may 4 mm, 3.5 mm or 3 mm or may have bigger or smaller values, e.g. depending on the tooth type that should be replaced. Defining a minimum height of the shortened cap ensures that even if a bar is attached to the cap at such a position that the shortening would result in a too short (i.e. with a height less than a minimum height) cap, a useable cap may exist, since the adjusted location of the cutting surface ensures that the height is not less than the minimum height.

For adjusting of the location of the cutting surface, for example, the difference value between the height of the cap below the cutting surface and the minimal height may be determined and the cutting surface may be shifted by this difference value along the direction in which the height is determined to increase the height of the cap below the cutting surface.

The cutting surface may be defined as being plane or curved. By having a curved cutting surface it may be possible to have a larger surface on the cap to which e.g. a crown may be attached in comparison to the surface that may result from cutting the cap along a plane cutting surface.

A dental bridge may comprise two, three, four or more caps from which one, two, three or more caps may be shortened. In case two or more teeth of a patient have to be provided with dental restorations, a dental bridge may be provided which has two or more caps. To these caps one or more bars may be attached and the computer-implemented method may be used to digitally shorten these caps.

Further, the present invention is related to a computer-readable medium having stored thereon instructions, which when executed by a processor, are adapted to perform any of the above identified method steps.

Preferred embodiments of the invention will be illustrated with reference to the enclosed figures. In the figures:
Figure 1 shows a flow diagram describing the computer-implemented method for shortening of a cap of a dental bridge;
Figure 2a shows a cap with an attached bar;
Figure 2b shows the cap of Figure 2a with the performed cut;
Figure 2c shows the shortened cap of Figures 2a and 2b;
Figure 3a shows a cap with an attached bar;
Figure 3b shows the cap of Figure 3a with the performed cut;
Figure 3c shows the shortened cap of Figures 3a and 3b;
Figure 4a shows a cap with two attached bars; and
Figure 4b shows a cap with two attached bars.

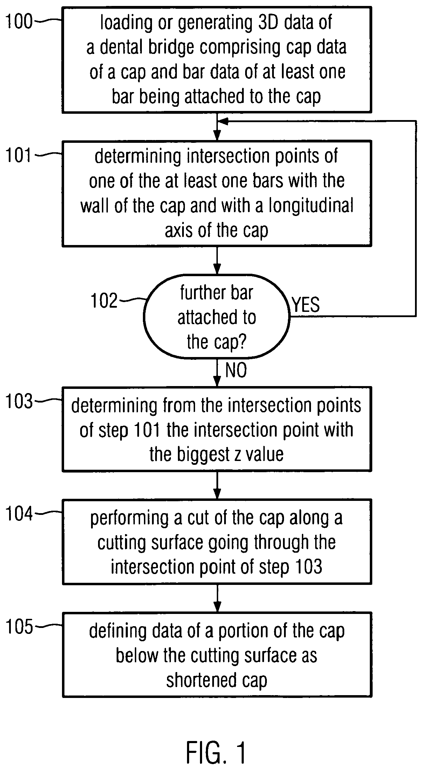

In Figure 1, a flow diagram with the steps performed in the computer-implemented method is shown. In step 100, three dimensional data of the dental bridge may be loaded from a computer-readable storage medium or the three dimensional data of the dental bridge may be generated with a modelling software, wherein the three dimensional data comprising cap data describing a cap of the dental bridge and bar data describing at least one bar of the dental bridge. The cap data may comprise data of the wall of the cap, the inward and outward end as well as data of a longitudinal axis; further data corresponding to the cap may be comprised by the cap data. The bar data may comprise data of the cross section of the at least one bar and data of the position at and orientation in which it is attached to the cap; further data corresponding to the at least on bar may be comprised by the bar data.

In step 101, intersection points of one of the at least one bars with a wall of the cap and intersection points of said bar with a longitudinal axis of the cap may be determined, wherein the axis is named z axis and extends in a direction from an inward end to an outward end of the cap. The inward end of the cap may be attached to a rest tooth or an implant and to the outward end dental fittings may be attached, such as crowns or veneers. If the dental bridge, for example, is attached to the lower jaw of a patient, the inward end of the cap is directed to the bone of the lower jaw and the outward end is directed away from the bone of the lower jaw.

In step 102, it is determined whether a further bar is attached to the cap, if so (branch "YES"), going back to step 101 and if not (branch "NO") going to step 103. When a second bar is attached to the cap, its intersection points also have to be taken into account when determining the intersection point with the biggest z value on the z axis of the cap. In most cases the bars may be attached at different heights and with different inclination angles with respect to the z axis of the cap such that the intersection points may be located at different heights.

In step 103, from the intersection points determined in step 101, the intersection point with the biggest z value is determined. With this step from all determined intersection points the one with the biggest z value is selected. Thus, all bars being connected to a cap may be taken into account and it may be prevented that one of several bars may be cut by the cutting surface if it would not have been considered.

In step 104, a cut of the cap along a cutting surface going through said intersection point with the biggest z value is performed. Thus, the existing cap may be separated in two portions, one being the shortened cap and one being some remaining portion of the cap that is not required for the dental bridge.

In step 105, data of a portion of the cap below the cutting surface is defined as shortened cap, wherein below means in direction to the inward end of the cap.

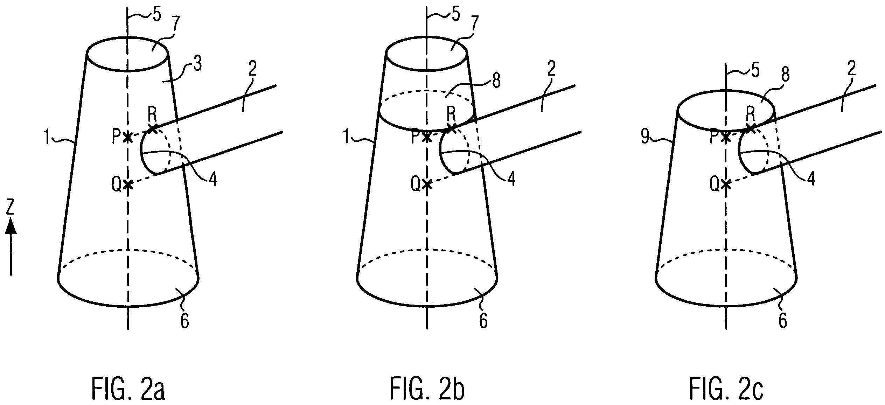

In Figure 2a, part of a dental bridge with one cap 1 and one bar 2 being attached to the cap 1 is shown. The bar 2 is attached to the cap 1 such that the central axis of the bar 2 is directed towards the inward end 6 of the cap 1.

The intersection points of the surface of the bar 2 with the wall 3 of the cap 1 result in a closed curve 4; in the depicted case, as the bar 2 has a circular cross section, the curve 4 is a deformed ellipse. The intersection of the surface of the bar 2 with the axis 5 of the cap 1 results in two intersections points P, Q.

From these determined intersection points (i.e. the intersection points on the closed curve 4 and the two intersection points P, Q on the axis 5), the intersection point R having the biggest z value is determined and then this intersection point R is used to define the cutting surface 8. The intersection point R with the biggest z value lies on the wall 3 of the cap 1. In Figure 2b, the cutting surface 8 is shown which goes through the intersection point R having the biggest z value. In the depicted case, the cutting surface is plane and its normal vector corresponds to the direction of the axis 5 of the cap 1.

In Figure 2c, the resulting shortened cap 9 is shown. The new outward end 8 of this cap 9 now corresponds to the cutting surface 8.

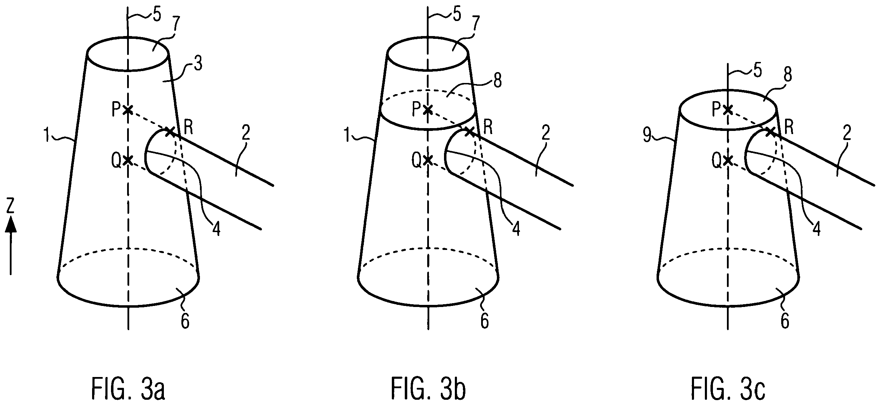

Figure 3a shows a part of another dental bridge with one cap 1 and one bar 2 being attached to the cap 1. The bar 2 is attached to the cap 1 such that the central axis of the bar 2 is directed towards the outward end 7 of the cap 1.

The intersection points of the surface of the bar 2 with the wall 3 of the cap 1 result in a closed curve 4; in the depicted case, as the bar 2 has a circular cross section, the curve 4 is a deformed ellipse. The intersection of the surface of the bar 2 with the axis 5 of the cap 1 results in two intersections points P, Q.

From these determined intersection points (i.e. the intersection points on the closed curve 4 and the two intersection points P, Q on the axis 5), the intersection point P having the biggest z value is determined and then this intersection point P is used to define the cutting surface 8. The intersection point P with the biggest z value lies on the axis 5 of the cap 1.

In Figure 3b, the cutting surface 8 is shown which goes through the intersection point P having the biggest z value. In the depicted case, the cutting surface is plane and its normal vector corresponds to the direction of the axis 5 of the cap 1. In Figure 3c, the resulting shortened cap 9 is shown. The new outward end 8 of this cap 9 now corresponds to the cutting surface 8.

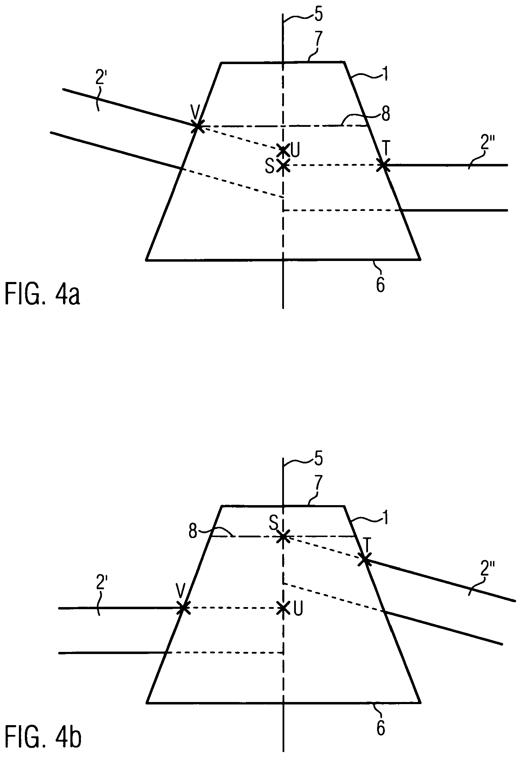

Figure 4a shows a side view of one example of a cap 1 with two attached bars 2', 2". When performing the inventive method, for example, first the intersection points of the bar 2' on the left-hand-side of the cap 1 with the wall 3 of the cap 1 (point V is indicated as an example) and with the axis 5 of the cap 1 (point U is indicated as an example) may be determined and then the respective intersection points (points T and S are indicated as an example) of the bar 2" on right-hand-side of the cap 1 may be determined. The intersection point with the biggest z value is the point indicated by V and this intersection point V lies on the wall 3 of the cap 1. The side view of the cutting surface 8 when the normal vector of the cutting surface is directed along the axis 5 of the cap 1 is shown.

In Figure 4b another configuration of a cap 1 with two bars 2', 2" is shown in side view. Here, the intersection point with the biggest z value is the point indicated by S and this intersection point S lies on the axis 5 of the cap 1. The cutting surface 8 thus goes through the intersection point S.

## Claims

1. Computer-implemented method for digitally shortening a cap (1) of a dental bridge, the method comprising the steps of:
(a) loading three dimensional data of the dental bridge from a computer-readable storage medium, the three dimensional data comprising cap data describing a cap (1) of the dental bridge and bar data describing at least one bar (2, 2', 2") of the dental bridge, the at least one bar (2, 2', 2") being attached to the cap (1); or generating three dimensional data of the dental bridge with a modelling software, the three dimensional data comprising cap data describing a cap (1) of the dental bridge and bar data describing at least one bar (2, 2', 2") of the dental bridge, the at least one bar (2, 2', 2") being attached to the cap (1);
**characterized by**
obtaining data interpolating an extension of the at least one bar (2, 2', 2") by interpolating dimensions describing physical dimensions of the at least one bar (2, 2', 2") beyond the end of the at least one bar,
(b) determining intersection points (P, Q, R, S, T, U, V) of one of the at least one bars (2, 2', 2") with geometrical features of the cap (1), i.e., the intersection points (R, T, V) of the at least one bar with a wall of the cap and intersection points (P, Q, S, U) of the data interpolating the extension of the bar (2, 2', 2") with a longitudinal axis (5) of the cap (1), said axis (5) being named z axis and extending in a direction from an inward end (6) to an outward end (7) of the cap (1), the intersection points (P, Q, R, S, T, U, V) being described by three dimensional coordinates, wherein the z axis is the z axis of a Cartesian coordinate system, a z value being a z coordinate of an intersection point (P, Q, R, S, T, U, V);
and in case that a further bar (2, 2', 2") is attached to the cap (1), repeating step (b) and considering in repeated step (b) the further bar (2, 2', 2") instead of the one of the at least one bars (2, 2', 2"), allowing all bars (2, 2', 2") being connected to the cap (1) being taken into account and preventing that one of said bars (2, 2', 2") will be cut by a cutting surface (8);
(c) determining from said intersection points (P, Q, R, S, T, U, V) an intersection point (P, R, S, V) with the biggest z value on said z axis;
(d) performing a cut of the cap (1) along the cutting surface (8), the location of which is based on said intersection point (P, R, S, V) with the biggest z value, such as said cutting surface being defined to go through said intersection point (P, R, S, V) with the biggest z value;
(e) defining data of a portion of the cap (1) below the cutting surface (8) as shortened cap (9), wherein below means in direction to the inward end (6) of the cap (1),
wherein the cutting surface is a plane having a normal vector extending in a direction of the longitudinal axis of the cap.

2. The method of claim 1, further comprising the step of selecting the longitudinal axis (5) to be a central and/or symmetry axis of the cap (1).

3. The method of claim 1 or 2, further comprising the step of rounding of cutting edges of the shortened cap (9).

4. The method of one of claims 1 to 3, further comprising the steps of determining a height of the cap below the cutting surface (8), determining whether said height is less than a minimum height,
if so, adjusting the location of the cutting surface (8) such that the shortened cap (9) has the minimum height,
if not, maintaining the location of the cutting surface (8).

5. The method of one of claims 1 to 4, wherein the dental bridge comprises two, three, four or more caps (1).

6. The method of claim 5, wherein one, two, three, four or more caps (1) are shortened.

7. Computer-readable medium having stored thereon instructions, which when executed by a processor, are adapted to perform any of the methods of claims 1 to 6.

## Patentansprüche

1. Computerimplementiertes Verfahren zum digitalen Kürzen einer Kappe (1) einer Zahnbrücke, wobei das Verfahren die Schritte umfasst:
(a) Laden von dreidimensionalen Daten der Zahnbrücke von einem computerlesbaren Speichermedium, wobei die dreidimensionalen Daten Kappendaten, die eine Kappe (1) der Zahnbrücke beschreiben, und Stegdaten, die zumindest einen Steg (2, 2', 2") der Zahnbrücke beschreiben, umfassen, wobei der zumindest eine Steg (2, 2', 2") mit der Kappe (1) verbunden ist; oder Erzeugen von dreidimensionalen Daten der Zahnbrücke mit einer Modellationssoftware, wobei die dreidimensionalen Daten Kappendaten, die eine Kappe (1) der Zahnbrücke beschreiben, und Stegdaten, die zumindest einen Steg (2, 2', 2") der Zahnbrücke beschreiben, umfassen, wobei der zumindest eine Steg (2, 2', 2") mit der Kappe (1) verbunden ist;
**gekennzeichnet durch**
Erhalten von Daten, die eine Ausdehnung des zumindest einen Stegs (2, 2', 2") über das Ende des zumindest einen Stegs hinaus interpolieren, durch Interpolieren von Dimensionen, die physikalische Dimensionen des zumindest einen Stegs (2, 2', 2") beschreiben,
(b) Ermitteln von Schnittpunkten (P, Q, R, S, T, U, V) eines der zumindest einen Stege (2, 2', 2") mit geometrischen Merkmalen der Kappe (1), i.e., die Schnittpunkte (R, T, V) des zumindest einen Stegs mit einer Wand der Kappe und Schnittpunkten (P, Q, S, U) der Daten, die die Ausdehnung des Stegs (2, 2', 2") interpolieren, mit einer Längsachse (5) der Kappe (1), wobei diese Achse (5) als z-Achse bezeichnet wird und sich in einer Richtung von einem inneren Ende (6) zu einem äußeren Ende (7) der Kappe (1) erstreckt, wobei die Schnittpunkte (P, Q, R, S, T, U, V) durch dreidimensionale Koordinaten beschrieben werden, wobei die z-Achse die z-Achse eines kartesischen Koordinatensystems ist, ein z-Wert eine z-Koordinate eines Schnittpunkts (P, Q, R, S, T, U, V) ist;
und im Falle eines weiteren Stegs (2, 2', 2"), der mit der Kappe (1) verbunden ist, Wiederholen des Schritts (b) und Berücksichtigen des weiteren Stegs (2, 2', 2") anstatt des einen des zumindest einen Stegs (2, 2', 2") im wiederholten Schritt (b), Ermöglichen alle Stege (2, 2', 2"), die mit der Kappe (1) verbunden sind, zu berücksichtugen, und Verhindern, dass einer dieser Stege (2, 2', 2") durch eine Schnittebene (8) geschnitten wird;
(c) Ermitteln von diesen Schnittpunkten (P, Q, R, S, T, U, V) einen Schnittpunkt (P, R, S, V) mit dem größten z-Wert auf dieser z-Achse;
(d) Durchführen eines Schnitts der Kappe (1) entlang der Schnittebene (8), wobei die Lage der Schnittebene auf diesem Schnittpunkt (P, R, S, V) mit dem größten z-Wert basiert, so dass diese Schnittebene als durch diesen Schnittpunkt (P, R, S, V) mit dem größten z-Wert gehend definiert ist;
(e) Definieren von Daten eines Teils der Kappe (1) unterhalb der Schnittebene (8) als gekürzte Kappe (9), wobei unterhalb in Richtung des inneren Endes (6) der Kappe (1) bedeutet,
wobei die Schnittebene eine Ebene ist, deren Normalenvektor sich in eine Richtung der Längsachse der Kappe erstreckt.

2. Das Verfahren nach Anspruch 1, weiter umfassend den Schritt vom Auswählen der Längsachse (5) als eine Mittelachse und/oder Symmetrieachse der Kappe (1).

3. Das Verfahren nach Anspruch 1 oder 2, weiter umfassend den Schritt vom Runden von Schnittkanten der gekürzten Kappe (9).

4. Das Verfahren nach einem der Ansprüche 1 bis 3, weiter umfassend die Schritte vom Ermitteln einer Höhe der Kappe unterhalb der Schnittebene (8), Ermitteln, ob diese Höhe kleiner ist als eine Minimalhöhe,
wenn dem so ist, Anpassen der Lage der Schnittebene (8), so dass die gekürzte Kappe (9) die Minimalhöhe hat,
wenn nicht, Beibehalten der Lage der Schnittebene (8).

5. Das Verfahren nach einem der Ansprüche 1 bis 4, wobei die Zahnbrücke zwei, drei, vier oder mehr Kappen (1) umfasst.

6. Das Verfahren nach Anspruch 5, wobei eine, zwei, drei, vier oder mehr Kappen (1) gekürzt werden.

7. Computerlesbares Medium mit darauf gespeicherten Instruktionen, die, wenn sie durch einen Prozessor ausgeführt werden, ausgebildet sind, jedes der Verfahren nach Ansprüchen 1 bis 6 durchzuführen.

## Revendications

1. Procédé implémenté par ordinateur pour raccourcir numériquement une coiffe (1) d'un bridge dentaire, le procédé comprenant les étapes consistant à :
(a) charger des données tridimensionnelles du bridge dentaire depuis un support de stockage lisible par ordinateur, les données tridimensionnelles comprenant des données de coiffe décrivant une coiffe (1) du bridge dentaire et des données de barre décrivant au moins une barre (2, 2', 2") du bridge dentaire, la au moins une barre (2, 2', 2") étant fixée à la coiffe (1) ; ou
générer des données tridimensionnelles du bridge dentaire à l'aide d'un logiciel de modélisation, les données tridimensionnelles comprenant des données de coiffe décrivant une coiffe (1) du bridge dentaire et des données de barre décrivant au moins une barre (2, 2', 2") du bridge dentaire, la au moins une barre (2, 2', 2") étant fixée à la coiffe (1) ;
**caractérisé par**
l'obtention de données interpolant une extension de la au moins une barre (2, 2', 2") en interpolant des dimensions décrivant des dimensions physiques de la au moins une barre (2, 2', 2") au-delà de l'extrémité de la au moins une barre,
(b) déterminer des points d'intersection (P, Q, R, S, T, U, V) de l'une des au moins une barre (2, 2', 2") avec des caractéristiques géométriques de la coiffe (1), c'est-à-dire les points d'intersection (R, T, V) de la au moins une barre avec une paroi de la coiffe et des points d'intersection (P, Q, S, U) des données interpolant l'extension de la barre (2, 2', 2") avec un axe longitudinal (5) de la coiffe (1), ledit axe (5) étant nommé axe z et s'étendant dans une direction allant d'une extrémité intérieure (6) à une extrémité extérieure (7) de la coiffe (1) , les points d'intersection (P, Q, R, S, T, U, V) étant décrits par des coordonnées tridimensionnelles, l'axe z étant l'axe z d'un système de coordonnées cartésiennes, une valeur z étant une coordonnée z d'un point d'intersection (P, Q, R, S, T, U, V) ;
et dans le cas où une autre barre (2, 2', 2") est fixée à la coiffe (1), répéter l'étape (b) et prendre en considération à l'étape répétée (b) l'autre barre (2, 2', 2") à la place de la première des au moins une barre (2, 2', 2"), en permettant que toutes les barres (2, 2', 2") qui sont connectées à la coiffe (1) soient prises en compte et en empêchant que l'une desdites les barres (2, 2', 2") soit coupée par une surface de coupe (8) ;
(c) déterminer à partir desdits points d'intersection (P, Q, R, S, T, U, V) un point d'intersection (P, R, S, V) ayant la plus grande valeur z sur ledit axe z ;
(d) effectuer une coupe de la coiffe (1) le long de la surface de coupe (8), dont l'emplacement est basé sur ledit point d'intersection (P, R, S, V) ayant la plus grande valeur z, de sorte que ladite surface de coupe est définie pour passer par ledit point d'intersection (P, R, S, V) ayant la plus grande valeur z ;
(e) définir des données d'une partie de la coiffe (1) située en dessous de la surface de coupe (8) en tant que coiffe raccourcie (9), dans lequel en dessous signifie dans une direction allant vers l'extrémité intérieure (6) de la coiffe (1),
dans lequel la surface de coupe est un plan ayant un vecteur normal s'étendant dans une direction de l'axe longitudinal de la coiffe.

2. Procédé selon la revendication 1, comprenant en outre l'étape consistant à sélectionner l'axe longitudinal (5) pour qu'il soit un axe central et/ou de symétrie de la coiffe (1).

3. Procédé selon la revendication 1 ou 2, comprenant en outre l'étape consistant à arrondir des arêtes de coupe de la coiffe raccourcie (9).

4. Procédé selon l'une des revendications 1 à 3, comprenant en outre les étapes consistant à déterminer une hauteur de la coiffe en dessous de la surface de coupe (8), à déterminer si ladite hauteur est inférieure à une hauteur minimale,
si tel est le cas, ajuster l'emplacement de la surface de coupe (8) de sorte que la coiffe raccourcie (9) a la hauteur minimale,
sinon, maintenir l'emplacement de la surface de coupe (8).

5. Procédé selon l'une des revendications 1 à 4, dans lequel le bridge dentaire comprend deux, trois, quatre ou plus de quatre coiffes (1).

6. Procédé selon la revendication 5, dans lequel un, deux, trois, quatre ou plus de quatre coiffes (1) sont raccourcies.

7. Support lisible par ordinateur sur lequel sont stockées des instructions qui, lorsqu'elles sont exécutées par un processeur, sont adaptées pour effectuer l'un quelconque des procédés selon les revendications 1 à 6.
